# EUROPEAN PATENT APPLICATION

(11) **EP 4 113 282 A1**
(43) Date of publication of application: **04.01.2023**
(21) Application number: 21182485.9
(22) Date of filing: 29.06.2021
(51) Int. Cl.: G06F 8/36

(54) **METHOD AND SYSTEM FOR GENERATING PROGRAMS FOR AN AUTOMATION SYSTEM BY CODE-SIMILARITY BASED APPROACH**

(71) Applicant: Siemens Aktiengesellschaft, 80333 München (DE)
(72) Inventor: ANTONY, Elvis, 560102 Bangalore, Karnataka (IN); CHOUDHARY, Mohit, 395010 Surat, Gujarat (IN); JOSHI, Janaki, 560100 Bengaluru, Karnataka (IN); KAMATH, Yogesh, 560076 Bangalore, Karnataka (IN); N, Madhusudanan, 560036 Bengaluru, Karnataka (IN)
(74) Representative: Isarpatent

(57) **Abstract**

The present invention provides a method and system for generating engineering programs for an automation system (106) by a code-similarity based approach. In one embodiment, the method comprises receiving, by a processing unit (202), a first request to generate an engineering program for an automation system (106). The method further comprises generating a knowledge graph for the first programming block, and for each programming block of a plurality of programming blocks. The method further comprises determining one or more programming blocks which are similar to the first programming block based on an analysis of the generated knowledge graph associated with the first programming block, and each programming block of the plurality of programming blocks. The method comprises generating the engineering program for the automation system (106) based on a combination of the first programming block and the determined one or more programming blocks of the plurality of programming blocks.

## Description

The present invention relates to a field of engineering of computer assisted programming, and more particularly relates to a method and system for generating engineering programs for an automation system by a code-similarity based approach.

A technical installation such as an industrial plant comprises one or more devices which is controlled by one or more engineering objects. Examples of the one or more engineering objects may include, for example, a programmable logic controller, one or more field devices, or any other automation devices. Examples of the one or more devices includes but is not limited to, control valves, motors, pumps, and actuators.

The one or more engineering objects control the one or more devices by execution of a plurality of engineering programs which may be stored in a memory. Each engineering program of the plurality of engineering programs may include a plurality of machine readable instructions to control the one more devices. The plurality of engineering programs may be coded in a plurality of special purpose programming languages. Further, the plurality of engineering programs may be coded by a plurality of code developers who may be working from a variety of locations.

In order to automatically generate an engineering program for an automation system of the industrial plant, an engineering system requires intricate knowledge of development of the plurality of engineering programs which may be already written for the automation system. Currently, there exist no means of dynamically sharing knowledge associated with the development of the plurality of engineering programs, among the plurality of code developers or with the engineering system. Thus, the engineering system may require an expert programmer to automatically generate the engineering program. The engineering system fails to generate error-free engineering program for the automation system, in absence of an expert engineer guidance.

Further, the plurality of engineering programs may comprise a large number of duplicate code, as a result of which, code size of the plurality of engineering programs may increase. Further, an engineering code which has an enormous code size may be difficult to protect and to execute.

In light of the above, there exists a need for a method and system for automatic generation of engineering programs for an automation system.

Therefore, it is an object of the present invention to provide a method and system for automatic generation of engineering programs for an automation system using code-similarity based approach.

The object of the present invention is achieved by a method of generating engineering programs for an automation system. The automation system is configured to automate functioning of a technical installation. The automation system may be a distributed control system configured to control one or more engineering objects of the technical installation. The technical installation is at least one of an industrial manufacturing plant, an industrial processing plant, or an industrial power plant. The technical installation comprises the one or more engineering objects. The one or more engineering objects are automation devices which function together in the technical installation to achieve one or more objectives of the technical installation. Examples of the one or more engineering objects comprises servers, robots, switches, automation devices, programmable logic controllers (PLC)s, human machine interfaces (HMIs), motors, valves, pumps, actuators, sensors and other industrial equipment(s).

Each of the one or more engineering objects comprises a processor and a memory. The memory is configured to store one or more engineering programs and a plurality of programming blocks. The processor of the one or more engineering object is configured to execute the one or more engineering program to achieve one or more key performance indicators associated with the one or more engineering programs. Examples of the one or more key performance indicators includes a processing speed, a memory requirement, and a process efficiency of the one or more engineering programs, when the one or more engineering programs are executed by the processor of the one or more engineering objects. The one or more engineering objects in the technical installation may be connected to each other via one or more physical connections. The one or more physical connections may comprise a physical link (such as wirings or cables). In an alternate embodiment, the connections may also be a wireless link. Further, functioning of the one or more engineering objects may be defined based on a plurality of parameter values. The plurality of parameter values comprises motor configuration parameters, network and communication parameters, valve controls, temperature or pressure values of a sensor, speed, torque and the like.

In a preferred embodiment, the method comprises receiving, by a processing unit, a first request to generate an engineering program for an automation system. The first request comprises information associated with a first programming block. The first request may be received from a user. The first request may be a text based request, a voice based request, or a gesture based request. In one example, the first programming block may comprises a sequence of programming code which, when executed by the one or more engineering objects, causes the one or more engineering objects to perform one or more designated functions. The sequence of programming codes are coded as at least one of a machine readable instruction written in a natural language, a high level programming language, an assembly language, or compiled code.

In the preferred embodiment, the method further comprises generating a knowledge graph for the first programming block, and for each programming block of a plurality of programming blocks which are stored in a database. The knowledge graph is an abstraction of a programming domain that captures semantics of a plurality of programming concepts such as class hierarchy, command lines, data variables, and data structures of the set of programming blocks and one or more relationships amongst the plurality of programming concepts concepts and a plurality of the program attributes like class hierarchy, member variables declared, data types of the variables, memory segments used, system functions and resources used, links to other industrial domain objects, etc. The knowledge graph associated with each programming block of the plurality of programming blocks comprises a combination of a control flow graph and a data flow graph of each of the plurality of programming blocks. The control flow graph is a graphical representation of a sequence of execution of each command in the plurality of programming blocks, when the plurality of programming blocks are executed by the one or more engineering objects. The data flow graph is a graphical representation of a sequence of flow of data among one or data variables in the plurality of programming blocks, when the plurality of programming blocks are executed by the one or more engineering objects. The knowledge graph based representation encapsulates the semantics of the plurality of programming blocks as a structure that can be queried in an extremely fast and scalable manner compared to other forms of representation. For example, the knowledge graph generated for the each programming block is generated based on a combination of a control flow graph associated with the particular programming block and data flow relationships associated with a set of variables of the particular programming block.

To generate the knowledge graph for each programming block of the plurality of programming blocks, an initial pass is executed on the particular programming block to collect a control flow and a data flow of the particular programming block. The collected control flow comprises an order of statements in the particular programming block. The data flow comprises behavioral information associated with one or more data variables of the particular programming block, and the knowledge graph is generated based on the collected control flow and the collected data flow associated with the particular programming block.

In yet another preferred embodiment, the method further comprises generating two or more embeddings for the generated knowledge graph. Each of the two or more embeddings comprises a plurality of tokens. Each of the plurality of tokens correspond to a code statement in the particular programming block. In one example, the two or more embeddings are word embeddings. In another example, the two or more embeddings are paragraph embeddings.

In yet another preferred embodiment, the method further comprises determining, by the processing unit, a distance between each pair of embeddings in the two or more embeddings generated for the knowledge graph. The method further comprises determining the degree of similarity for the particular programming block based on the determined distance between each pair of embeddings in the two or more embeddings generated for the knowledge graph. The degree of similarity calculated for each programming block of the plurality of programming block is a numeric metric of similarity of the particular programming block with the first programming block. In one example, each of the two or more embeddings may be represented as a plurality of vectors. In one example, a distance between each pair of embeddings in the two or more embeddings is obtained as a cosine distance between each pair of vectors in the plurality of vectors. The distance between each pair of embeddings can be obtained via other geometric methods as well. The degree of similarity for the particular programming block is obtained from an inverse of the cosine distance between each pair of vectors in the plurality of vectors.

Further, a degree of similarity between a first program and a second program is obtained based on a measurement of mathematical similarity of embeddings of a first knowledge graph associated with the first program and a second knowledge graph associated with the second program.

In one example, the method comprises application of standard paragraph embedding methods used in Natural Language Processing algorithms on the generated knowledge graph associated with the plurality of programming blocks to obtain an embedding for the generated knowledge graph. The obtained embedding comprise the plurality of tokens. The plurlaity of tokens correspond to triples in the generated knowledge graph. Advantageously, a combination of knowledge graph embeddings and the generated knowledge graphs are used to identify similarity between the first programming block and the plurality of programming blocks.

In yet another preferred embodiment, the method further comprises determining, by the processing unit, from the plurality of programming blocks, one or more programming blocks which are similar to the first programming block based on an analysis of the generated knowledge graph associated with the first programming block, and each programming block of the plurality of programming blocks.

In yet another preferred embodiment, the method further comprises generating the engineering program for the automation system based on a combination of the first programming block and the determined one or more programming blocks of the plurality of programming blocks. Advantageously, code development time and labor required to generate the engineering program for the automation system is significantly reduced.

In yet another preferred embodiment, the method further comprises analyzing, by the processing unit, the knowledge graph generated for each programming block of the plurality of programming blocks to determine a degree of similarity of each programming block of the plurality of programming blocks to the first programming block.

In yet another preferred embodiment, the method further comprises generating, by the processing unit, a graph comprising a set of programming blocks which are similar to the first programming block based on the determined degree of similarity associated with each programming block of the plurality of programming blocks.

In yet another preferred embodiment, the method further comprises displaying, by the processing unit, the generated graph comprising the set of programming blocks which are similar to the first programming block, on a display device.

The object of the present invention is achieved by a method of generating engineering programs for an automation system. The method further comprises receiving, by the processing unit, a second request to classify the plurality of programming blocks into a plurality of clusters. The method further comprises classifying, by the processing unit, the plurality of programming blocks into the plurality of clusters based on the determined degree of similarity associated with each programming block of the plurality of programming blocks.

The method further comprises displaying, by the processing unit, one or more programming blocks which are classified into each cluster of the plurality of clusters. The method further comprises receiving, by the processing unit, a second request to reduce a number of programming blocks in the plurality of programming blocks. The method further comprises analyzing the degree of similarity associated with each programming blocks to determine one or more programming blocks of the plurality of programming blocks, which are duplicates of at least one programming block of the plurality of programming blocks. The method further comprises replacing, by the processing unit, the one or more programming blocks with the at least one programming block, thereby reducing the number of programming blocks in the plurality of programming blocks. The method further comprises receiving, by the processing unit, a second request to identify duplicate variables in each programming block of the plurality of programming blocks. The method further comprises analyzing the knowledge graph associated with each programming blocks to determine a first set of duplicate variables in the particular programming block. The method further comprises displaying, by the processing unit, the determined first set of variables on the display device.

The method further comprises receiving, by the processing unit, a second request to optimize the engineering program. The method further comprises analyzing, by the processing unit, the degree of similarity associated with each programming block in the engineering program, to determine one or more programming blocks of the plurality of programming blocks, which are more optimized than at least one programming block of the engineering program. The method further comprises replacing, by the processing unit, the at least one programming block of the engineering program, with the one or more programming blocks of the plurality of programming blocks, thereby optimizing the generated engineering program.

In a preferred embodiment, the method comprises receiving, by the processing unit, an incomplete code snippet from a user. The method further comprises generating, by the processing unit, a knowledge graph associated with the incomplete code snippet based on an analysis of the incomplete code snippet. The method further comprises generating, by the processing unit, a knowledge graph for each programming block of a plurality of programming blocks which are stored in a database. The method further comprises determining a degree of similarity associated with the code snippet based on an analysis of the knowledge graph associated with the incomplete code snippet and the knowledge graph associated with each programming block of the plurality of programming blocks. The method further comprises determining one or more programming blocks in the plurality of programming blocks which are similar to the received incomplete code snippet based on the determined degree of similarity associated with the incomplete code snippet. The method further comprises generating, by the processing unit, the engineering program by completion of the incomplete code snippet based on the determined one or more programming blocks which are similar to the received incomplete code snippet. Advantageously, code development time and labor required to generate the engineering program for the automation system are significantly reduced.

The object of the present invention is also achieved by an engineering system for generating engineering programs. The engineering system comprises one or more processor(s) and a memory coupled to the processor. The memory comprises an automation module stored in the form of machine-readable instructions executable by the processor. The automation module is configured for performing the method as described above.

The object of the present invention is also achieved by an industrial environment. The industrial environment comprising an engineering system, an automation system comprising one or more physical components and one or more client devices communicatively coupled to the engineering system and the technical installation. The engineering system is configured to perform the above described method steps.

The object of the present invention is also achieved by a computer-program product having machine-readable instructions stored therein, that when executed by a processing unit, cause the processing unit to perform method steps as described above.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: is a block diagram of an industrial environment capable of generating engineering programs for an automation system, according to an embodiment of the present invention;
- FIG 2: is a block diagram of an engineering system, such as shown in FIG 1, in which an embodiment of the present invention can be implemented;
- FIG 3: is a block diagram of an automation module, such as shown in FIG 2, in which an embodiment of the present invention can be implemented;
- FIG 4A-C: is a process flowchart illustrating an exemplary method of generating engineering programs for an automation system, according to an embodiment of the present invention; and
- FIG 5: is a process flowchart illustrating an exemplary method of generating engineering programs for an automation system, according to an embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

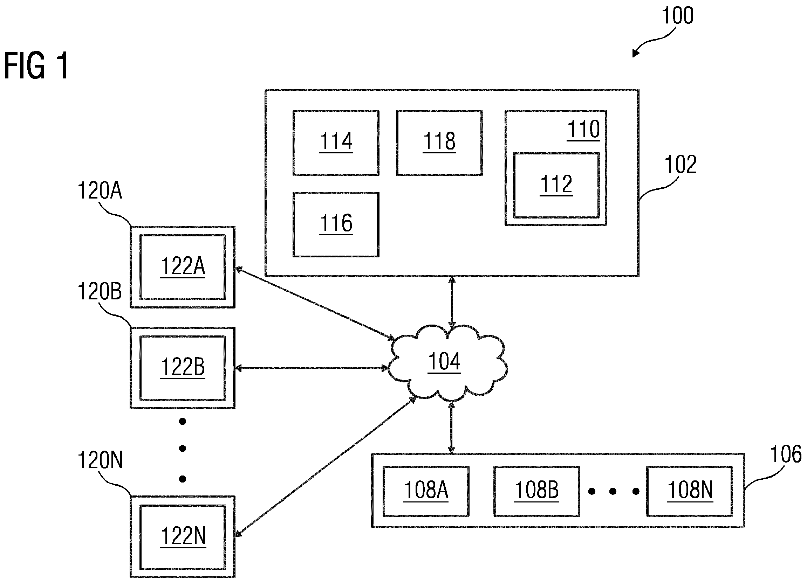

FIG 1 is a block diagram of an industrial environment 100 capable of generating engineering programs, according to an embodiment of the present invention. In FIG 1, the industrial environment 100 includes an engineering system 102, an automation system 106 of a technical installation, and one or more client devices 120A-N. As used herein, "industrial environment" refers to a processing environment comprising configurable computing physical and logical resources, for example, networks, servers, storage, applications, services, etc., and data distributed over a platform, such as cloud computing platform. The industrial environment 100 provides on-demand network access to a shared pool of the configurable computing physical and logical resources. The engineering system 102 is communicatively connected to the automation system 106 via the network 104 (such as Local Area Network (LAN), Wide Area Network (WAN), Wi-Fi, Internet, any short range or wide range communication). The engineering system 102 is also connected to the one or more client devices 120AN via the network 104.

The engineering system 102 is connected to one or more engineering objects 108A-N of the automation system 106 in the technical installation via the network 104. The one or more engineering objects 108A-N may include servers, robots, switches, automation devices, programmable logic controllers (PLC)s, human machine interfaces (HMIs), motors, valves, pumps, actuators, sensors and other industrial equipment(s). The one or more engineering objects 108A-N may be connected to each other or several other components (not shown in FIG 1) via physical connections. The physical connections may be through wiring connections between the one or more engineering objects 108A-N. Alternatively, the one or more engineering objects 108A-N may also be connected via non-physical connections (such as Internet of Things (IOT) and 5G networks). Although, FIG 1 illustrates the engineering system 102 connected to one automation system 106, one skilled in the art can envision that the engineering system 102 can be connected to several technical installations located at different geographical locations via the network 104.

The client devices 120A-N may be a desktop computer, laptop computer, tablet, smart phone and the like. Each of the client devices 120A-N is provided with an engineering tool 122AN for generating and/or editing engineering programs respectively. The client devices 120A-N can access the engineering system 102 for automatically generating engineering programs. The client devices 120A-N can access cloud applications (such as providing performance visualization of the one or more engineering objects 108A-N via a web browser). Throughout the specification, the terms "client device" and "user device" are used interchangeably.

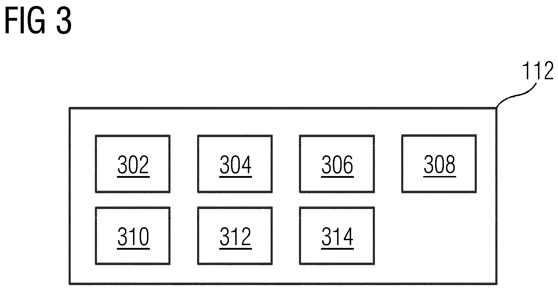

The engineering system 102 may be a standalone server deployed at a control station or may be a server on a cloud computing system. In a preferred embodiment, the engineering system 102 may be a cloud-based engineering system. The engineering system 102 is capable of delivering applications (such as cloud applications) for managing the automation system 106 for a technical installation which comprises one or more engineering objects 108A-N. The engineering system 102 may comprise a platform 110(such as a cloud computing platform), an automation module 112, a server 114 including hardware resources and an operating system (OS), a network interface 116 and a database 118. The network interface 116 enables communication between the engineering system 102, the automation system 106, and the client device(s) 120A-N. The interface (such as cloud interface)(not shown in FIG 1) may allow the engineers at the one or more client device(s) 120AN to access engineering project files stored at the engineering system 102 and perform one or more actions on the engineering project files as same instance. The server 114 may include one or more servers on which the OS is installed. The servers 114 may comprise one or more processors, one or more storage devices, such as, memory units, for storing data and machine-readable instructions for example, applications and application programming interfaces (APIs), and other peripherals required for providing computing (such as cloud computing) functionality. The platform 110 enables functionalities such as data reception, data processing, data rendering, data communication, etc. using the hardware resources and the OS of the servers 114 and delivers the aforementioned services using the application programming interfaces deployed therein. The platform 110 may comprise a combination of dedicated hardware and software built on top of the hardware and the OS. In an exemplary embodiment, the platform 110 may correspond to an Integrated Development Environment (IDE) comprising program editors and compilers which allow the users of the client devices 120A-N to generate engineering programs. The platform 110 may further comprise an automation module 112 configured for generating engineering programs. Details of the automation module 112 is explained in FIG. 3.

The database 118 stores the information relating to the automation system 106 and the client device(s) 120A-N. The database 118 is, for example, a structured query language (SQL) data store or a not only SQL (NoSQL) data store. In an exemplary embodiment, the database 118 may be configured as cloud-based database implemented in the industrial environment 100, where computing resources are delivered as a service over the platform 110. The database 118, according to another embodiment of the present invention, is a location on a file system directly accessible by the automation module 112. The database 118 is configured to store engineering project files, engineering programs, object behavior model, parameter values associated with the one or more engineering objects 108A-N, test results, simulation results, status messages, one or more simulation instances, graphical programs, program logics, program logic patterns, engineering objects 108A-N and engineering object properties, one or more engineering object blocks, relationship information between the engineering objects, requirements, program update messages and the like.

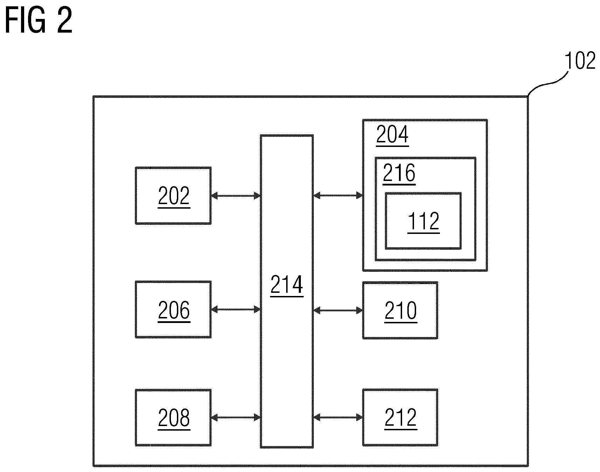

FIG 2 is a block diagram of an engineering system 102, such as those shown in FIG 1, in which an embodiment of the present invention can be implemented. In FIG 2, the engineering system 102 includes a processor(s) 202, an accessible memory 204, a storage unit 206, a communication interface 208, an input-output unit 210, a network interface 212 and a bus 214.

The processor(s) 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The processor(s) 202 may also include embedded controllers, such as generic or programmable logic devices or arrays, application specific integrated circuits, single-chip computers, and the like.

The memory 204 may be non-transitory volatile memory and nonvolatile memory. The memory 204 may be coupled for communication with the processor(s) 202, such as being a computer-readable storage medium. The processor(s) 202 may execute machine-readable instructions and/or source code stored in the memory 204. A variety of machine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 204 includes an integrated development environment (IDE) 216. The IDE 216 includes an automation module 112 stored in the form of machine-readable instructions on any of the above-mentioned storage media and may be in communication with and executed by the processor(s) 202.

When executed by the processor(s) 202, the automation module 112 causes the processor(s) 202 to generate engineering programs in the engineering system 102. In an embodiment, the automation module 112 causes the processor(s) 202 to receive a first request to generate an engineering program for an automation system. The first request comprises information associated with a first programming block. The first request may be received from a user. The first request may be a text based request, a voice based request, or a gesture based request. In one example, the first programming block may comprises a sequence of programming code which, when executed by the one or more engineering objects 108A-N, causes the one or more engineering objects 108A-N to perform one or more functions. The sequence of programming codes are coded as at least one of a machine readable instruction written in a natural language, a high level programming language, an assembly language, or compiled code. Upon receiving the request to generate the engineering program of the automation system 106, the automation module 112 causes the processor(s) 202 to generate a knowledge graph for the first programming block. The knowledge graph is also generated based on each programming block of a plurality of programming blocks which are stored in the database 118. The knowledge graph is an abstraction of a programming domain that captures semantics of a plurality of programming concepts such as class hierarchy, command lines, data variables, and data structures of the set of programming blocks and one or more relationships amongst the plurality of programming concepts and a plurality of the program attributes like class hierarchy, member variables declared, data types of the variables, memory segments used, system functions and resources used, links to other industrial domain objects, etc.

The knowledge graph associated with each programming block of the plurality of programming blocks comprises a combination of a control flow graph and a data flow graph of each of the plurality of programming blocks. The control flow graph is a graphical representation of a sequence of execution of each command in the plurality of programming blocks when the plurality of programming blocks are executed by the one or more engineering objects. The data flow graph is a graphical representation of a sequence of flow of data among one or data variables in the plurality of programming blocks when the plurality of programming blocks are executed by the one or more engineering objects. The knowledge graph based representation encapsulates a semantics of the plurality of programming blocks as a structure that can be queried in an extremely fast and scalable manner compared to other forms of representation. For example, the knowledge graph generated for the each programming block is generated based on a combination of a control flow graph associated with the particular programming block and data flow relationships associated with a set of variables of the particular programming block.

To generate the knowledge graph for each programming block of the plurality of programming blocks, an initial pass is executed on the particular programming block to collect a control flow and a data flow of the particular programming block. The collected control flow comprises an order of statements in the particular programming block. The data flow comprises behavioral information associated with one or more data variables of the particular programming block, and the knowledge graph is generated based on the collected control flow and the collected data flow associated with the particular programming block.

Further, the automation module 112 causes the processor(s) 202 to generate two or more embeddings for the generated knowledge graph. Each of the two or more embeddings comprises a plurality of tokens. Each of the plurality of tokens correspond to a code statement in the particular programming block. In one example, the two or more embeddings are word embeddings. In another example, the two or more embeddings are paragraph embeddings. Further, the automation module 112 causes the processor 202 to determine a distance between each pair of embeddings in the two or more embeddings generated for the knowledge graph.

Furthermore, the automation module 112 causes the processor 202 to determine the degree of similarity for the particular programming block based on the determined distance between each pair of embeddings in the two or more embeddings generated for the knowledge graph. The degree of similarity calculated for each programming block of the plurality of programming block, is a numeric metric of similarity of the particular programming block, with the first programming block. In one example, each of the two or more embeddings may be represented as a plurality of vectors. In such a case, a distance between each pair of embeddings in the two or more embeddings is obtained as a cosine distance between each pair of vectors in the plurality of vectors. In such a case, the degree of similarity for the particular programming block is obtained from an inverse of the cosine distance between each pair of vectors in the plurality of vectors.

Thereafter, a degree of similarity between a first program and a second program is obtained based on a measurement of mathematical similarity of embeddings of a first knowledge graph associated with the first program and a second knowledge graph associated with the second program.

For example, the automation module 112 causes the processor(s) 202 to apply standard paragraph embedding methods used in Natural Language Processing algorithms on the generated knowledge graph associated with the plurality of programming blocks to obtain an embedding for the generated knowledge graph. The obtained embedding comprise the plurality of tokens. The plurality of tokens correspond to triples in the generated knowledge graph. Advantageously, a combination of knowledge graph embeddings and the generated knowledge graphs are used to identify similarity between the first programming block and the plurality of programming blocks.

The automation module 112 causes the processor(s) 202 to determine one or more programming blocks which are similar to the first programming block from the plurality of programming blocks based on an analysis of the generated knowledge graph associated with the first programming block, and each programming block of the plurality of programming blocks.

The automation module 112 causes the processor(s) 202 to generate the engineering program for the automation system 106 based on a combination of the first programming block and the determined one or more programming blocks of the plurality of programming blocks.

Also, the automation module 112 causes the processor(s) 202 to generate a graph comprising a set of programming blocks which are similar to the first programming block based on the determined degree of similarity associated with each programming block of the plurality of programming blocks. The automation module 112 causes the processor(s) 202 to display the generated graph comprising the set of programming blocks which are similar to the first programming block on a display device such as one of the client devices (120A-N).

The automation module 112 causes the processor(s) 202 to generate a simulation instance for the engineering objects 108AN. The automation module 112 causes the processor(s) 202 to simulate behavior of the one or more engineering objects 108A-N of the automation system 106 in a simulation environment by executing the engineering program on the generated simulation instance. Also, the automation module 112 causes the processor(s) 202 to validate the engineering program associated with the automation system 106 based on results of simulation. Furthermore, the automation module 112 causes the processor(s) 202 to deploy the generated engineering program in real-time onto the one or more engineering objects 108A-N installed in the automation system 106 based on the validation results.

The storage unit 206 may be a non-transitory storage medium configured for storing a database (such as database 118) which comprises server version of the plurality of programming blocks associated with the set of industrial domains.

The communication interface 208 is configured for establishing communication sessions between the one or more client devices 120A-N and the engineering system 102. The communication interface 208 allows the one or more engineering applications running on the client devices 120A-N to import/export engineering project files into the engineering system 102. In an embodiment, the communication interface 208 interacts with the interface at the one or more client devices 120A-N for allowing the engineers to access the engineering programs associated with an engineering project file and perform one or more actions on the engineering programs stored in the engineering system 102.

The input-output unit 210 may include input devices a keypad, touch-sensitive display, camera (such as a camera receiving gesture-based inputs), etc. capable of receiving one or more input signals, such as user commands to process engineering project file. Also, the input-output unit 210 may be a display unit for displaying a graphical user interface which visualizes the behavior model associated with the modified engineering programs and displays the status information associated with each set of actions performed on the graphical user interface. The set of actions may include execution of predefined tests, download, compilation and deployment of graphical programs. The bus 214 acts as interconnect between the processor 202, the memory 204, and the input-output unit 210.

The network interface 212 may be configured to handle network connectivity, bandwidth and network traffic between the engineering system 102, client devices 120A-N and the automation system 106.

Those of ordinary skilled in the art will appreciate that the hardware depicted in FIG 2 may vary for particular implementations. For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of an engineering system 102 as is unique to the present disclosure or necessary for an understanding of the present disclosure is depicted and described. The remainder of the construction and operation of the engineering system 102 may conform to any of the various current implementation and practices known in the art.

FIG 3 is a block diagram of an automation module 112, such as those shown in FIG 2, in which an embodiment of the present invention can be implemented. In FIG 3, the automation module 112 comprises a request handler module 302, an object behavior model generation module 304, an analysis module 306, a modifier module 308,an engineering object database 310, a validation module 312, and a deployment module 314. FIG 3 is explained in conjunction with FIG 1 and FIG 2.

The request handler module 302 is configured for receiving the first request to generate the engineering program associated with the automation system 106. For example, the first request is received from one of the one or more users external to the industrial environment 100 via a network. In alternative embodiment, the first request is received from the one of the one or more client devices 120A-N via the network.

The object behavior model generation module 304 is configured for generating the knowledge graph of each of the plurality of programming blocks. In a preferred embodiment, the knowledge graph comprises information about relationships between a set of variables corresponding to each programming block in the set of programming blocks and a set of Key performance indicators associated with the set of programming blocks. The set of variables comprises a plurality of data and pointer variables defined and used in the set of programming blocks. The set of key performance indicators associated with the set of programming blocks are key performance indicators achieved by the one or more engineering objects 108AN, when the one or more engineering objects 108A-N executes the set of programming blocks.

Further, the object behavior model generation module 304 is configured for determining one or more engineering object properties associated with each of the classified one or more engineering objects 108A-N. The object properties are object's domain context, association and relationship with other engineering objects, object size, object identifier, type of engineering object, and the like. Such object properties are determined for each of the one or more engineering objects. Such determination using ontology enables engineering object elicitation & generalization, defines property & relationship between the engineering objects.

In an embodiment, the object behavior model generation module 304 is also configured for managing the graphical programs corresponding to each of the one or more engineering objects 108A-N, physical connections between the one or more engineering objects 108A-N, and a plurality of parameter values associated with the one or more engineering objects 108A-N and the physical connections. A graphical program comprises a program logic. Each graphical program comprises a set of programmable instructions or statements corresponding to the program logic. Each graphical program may correspond to a function block under an engineering design. The engineering design may comprise several such function blocks. The users at the client devices 120A-N uses the engineering tool 122A-N in order to design or develop engineering programs by coding each of these graphical programs.

The analysis module 306 is configured for analyzing the knowledge graph associated with the plurality of programming blocks. Specifically, the analysis module 306 is configured for retrieving data and control parameters associated with each programming block of the plurality of programming blocks. The data and control parameters are key performance indicators comprising information relating to the set of programming blocks associated with the industrial domain of the automation system 106, for example, sensor data, actuator data, environment data, network data, any automation data and the like.

Further, the analysis module 306 is configured for comparing the retrieved data and control parameters associated with the set of programming blocks with data and control parameters stored in the object behavior model. Furthermore, the analysis module 306 is configured for identifying deviation between the retrieved data and control parameters associated with the set of programming blocks and the data and control parameters stored in the object behavior model. The deviation indicates a difference between the retrieved data and control parameters, and the data and control parameters stored in an object behavior model of the one or more engineering objects 108A-N. Also, the analysis module 306 is configured for determining type of behavior of the one or more engineering objects 108A-N corresponding to the identified deviation. In one example, the analysis module 306 is configured to analyze the plurality of programming blocks by application of a natural language processing algorithm on a source code of the plurality of programming blocks.

The modifier module 308 is configured for modifying the plurality of programming blocks based on the outcome of analysis of the knowledge graph. The plurality of programming blocks is modified based on the analysis of the knowledge graph. The modifications comprise any changes such as addition, deletion, update, replacement or revision of one or more variables, code lines, classes, functions, or comments in the set of programming blocks. In one example, an outcome of analysis of the knowledge graph may be a behavior report indicating whether behavior or characteristic of each programming block of the set of programming blocks as defined in the ontology schema is acceptable, improvised, enhanced, optimized or the like. Thus, the plurality of programming blocks are modified based on the relationships between the set of variables corresponding to each programming block in the set of programming blocks, the plurality of Key performance indicators associated with the set of programming blocks, and an industrial domain of the technical installation. Thus, the engineering program is generated based on the relationships between the set of variables corresponding to each programming block in the set of programming blocks, the set of Key performance indicators associated with the set of programming blocks, and the industrial domain of the technical installation.

The engineering object database 310 is configured for generating an engineering object library comprising the generated object behavior models, one or more engineering objects 108AN, physical connections between the one or more engineering objects 108A-N, and a plurality of parameter values associated with the one or more engineering objects 108A-N and the physical connections. The engineering object database 310 is configured for continuously updating the engineering object library with updated versions of the engineering programs. Also, the engineering object database 310 is configured for maintaining the engineering object library in an ontology schema.

The validation module 312 is configured to generate a simulation instance for one or more engineering objects 108A-N of the automation system. In one example, the simulation instance is a digital twin of the one or more engineering objects 108A-N. The validation module 312 is configured to simulate execution of the generated engineering program by the one or more engineering objects 108A-N of the automation system 106 in a simulation environment by executing the set of programming blocks on the generated simulation instance. The validation module 312 is configured to determine that the generated engineering program is valid, based on a result of the simulated execution of the generated second set of programming blocks. Further, the validation module 312 is configured for simulating behavior of the set of programming blocks in the simulation environment by executing the set of programming blocks on the generated simulation instance. The simulation environment emulates an actual technical installation, such as the technical installation. Further, the simulation environment may be a virtual setup of the actual technical installation. Also, the validation module 312 is configured for validating the behavior of the set of programming blocks based on results of simulation. The results of simulation may indicate success or failure of the engineering program or the set of programming block if deployed in the technical installation.

The deployment module 314 is configured for deploying the engineering program in real-time onto the one or more engineering objects 108A-N installed in the automation system 106 based on the validation. Advantageously, the generated engineering program is only deployed onto the one or more engineering objects 108A-N after the determination that the generated engineering program is valid.

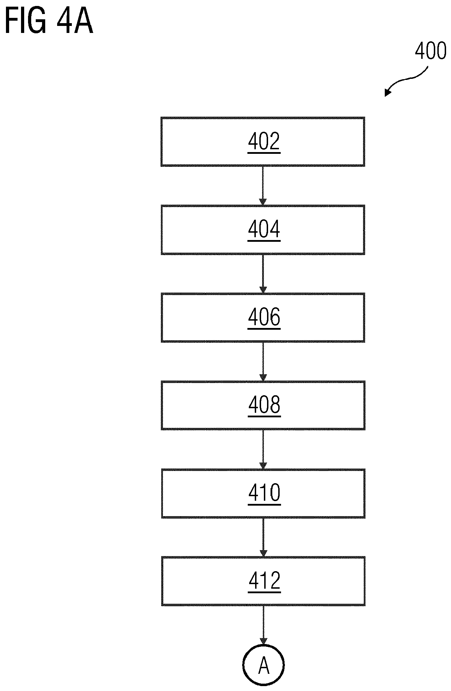

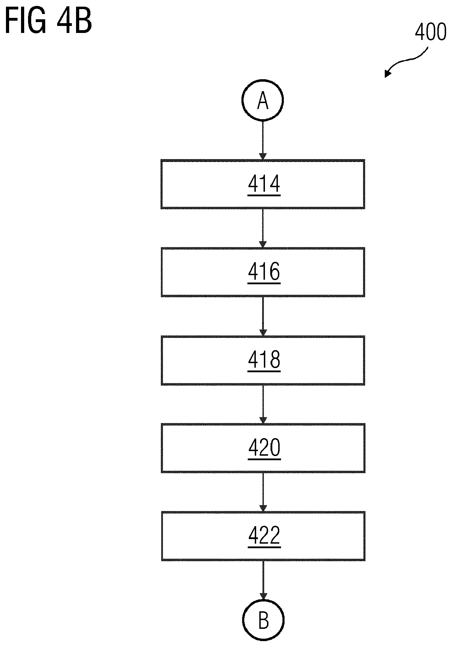

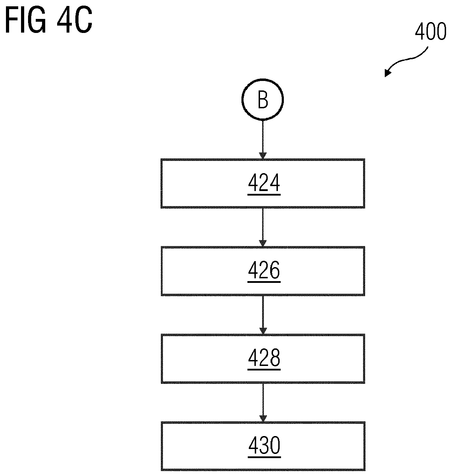

FIGs 4A-C is a process flowchart illustrating an exemplary method 400 of generating engineering programs in an engineering system 102, according to an embodiment of the present invention. At step 402, a first request to generate an engineering program for the automation system 106 is received by the processor 202. The first request comprises information associated with a first programming block. The first request may be received from a user. The first request may be a text based request, a voice based request, or a gesture based request. In one example, the first programming block may comprise a sequence of programming code which, when executed by the one or more engineering objects, causes the one or more engineering objects to perform one or more functions. The sequence of programming codes are coded as at least one of a machine readable instruction written in a natural language, a high level programming language, an assembly language, or compiled code.

At step 404, a knowledge graph is generated by the processor 202 for the first programming block and for each programming block of a plurality of programming blocks which are stored in the database 118. The knowledge graph is an abstraction of a programming domain that captures semantics of a plurality of programming concepts such as class hierarchy, command lines, data variables, and data structures of the set of programming blocks and one or more relationships amongst the plurality of programming concepts concepts and a plurality of the program attributes like class hierarchy, member variables declared, data types of the variables, memory segments used, system functions and resources used, links to other industrial domain objects, etc. The knowledge graph associated with each programming block of the plurality of programming blocks comprises a combination of a control flow graph and a data flow graph of each of the plurality of programming blocks.

The control flow graph is a graphical representation of a sequence of execution of each command in the plurality of programming blocks, when the plurality of programming blocks are executed by the one or more engineering objects. The data flow graph is a graphical representation of a sequence of flow of data among one or data variables in the plurality of programming blocks, when the plurality of programming blocks are executed by the one or more engineering objects. The knowledge graph based representation encapsulates a semantics of the plurality of programming blocks as a structure that can be queried in an extremely fast and scalable manner compared to other forms of representation. For example, the knowledge graph generated for the each programming block is generated based on a combination of a control flow graph associated with the particular programming block and data flow relationships associated with a set of variables of the particular programming block.

To generate the knowledge graph for each programming block of the plurality of programming blocks, an initial pass is executed on the particular programming block to collect a control flow and a data flow of the particular programming block. The collected control flow comprises an order of statements in the particular programming block. The data flow comprises behavioral information associated with one or more data variables of the particular programming block, and the knowledge graph is generated based on the collected control flow and the collected data flow associated with the particular programming block.

At step 406, two or more embeddings are generated by the processor 202 for the generated knowledge graph. Each of the two or more embeddings comprises a plurality of tokens. Each of the plurality of tokens correspond to a code statement in the particular programming block. In one example, the two or more embeddings are word embeddings. In another example, the two or more embeddings are paragraph embeddings.

At step 408, a distance between each pair of embeddings in the two or more embeddings generated for the knowledge graph is determined by the processor 202. Also, the processor 202 is configured to determine the degree of similarity for the particular programming block based on the determined distance between each pair of embeddings in the two or more embeddings generated for the knowledge graph. The degree of similarity calculated for each programming block of the plurality of programming block is a numeric metric of similarity of the particular programming block with the first programming block. In one example, each of the two or more embeddings may be represented as a plurality of vectors. In such a case, a distance between each pair of embeddings in the two or more embeddings is obtained as a cosine distance between each pair of vectors in the plurality of vectors. The degree of similarity for the particular programming block is obtained by the processor 202 from an inverse of the cosine distance between each pair of vectors in the plurality of vectors.

Further, a degree of similarity between a first program and a second program is obtained by the processor 202 based on a measurement of mathematical similarity of embeddings of a first knowledge graph associated with the first program and a second knowledge graph associated with the second program.

At step 410, a plurality of standard paragraph embedding methods used in Natural Language Processing algorithms are applied by the processor 202 on the generated knowledge graph associated with the plurality of programming blocks to obtain an embedding for the generated knowledge graph. The obtained embedding comprise the plurality of tokens. The plurality of tokens correspond to triples in the generated knowledge graph. Advantageously, a combination of knowledge graph embeddings and the generated knowledge graphs are used to identify similarity between the first programming block and the plurality of programming blocks.

At step 412, one or more programming blocks are determined by the processor 202 from the plurality of programming blocks, which are similar to the first programming block based on an analysis of the generated knowledge graph associated with the first programming block and each programming block of the plurality of programming blocks.

At step 414, the engineering program is generated by the processor 202 for the automation system based on a combination of the first programming block and the determined one or more programming blocks of the plurality of programming blocks. Advantageously, code development time and labor required to generate the engineering program for the automation system is significantly reduced.

At step 416, the knowledge graph is generated by the processor 202 for each programming block of the plurality of programming blocks to determine a degree of similarity of each programming block of the plurality of programming blocks, to the first programming block.

At step 418, a graph comprising a set of programming blocks which are similar to the first programming block based on the determined degree of similarity associated with each programming block of the plurality of programming blocks is generated by the processor 202. The generated graph comprises the set of programming blocks which are similar to the first programming block are displayed by the processor 202 on a display device such as one of the client devices (120A-N).

At step 420, a second request to classify the plurality of programming blocks into a plurality of clusters is received by the processor 202. Further, the processor 202 is configured to classify the plurality of programming blocks into the plurality of clusters based on the determined degree of similarity associated with each programming block of the plurality of programming blocks. At step 422, one or more programming blocks which are classified into each cluster of the plurality of clusters is displayed by the processor 202.

At step 424, a third request to optimize the engineering program, is received by the processing unit 202. The processing unit is further configured to analyze the degree of similarity associated with each programming block in the engineering program, to determine a programming block of the plurality of programming blocks, which is more optimized than at least one programming block of the engineering program. The programming block is determined to be more optimized than the at least one programming block, if at least one key performance indicator associated with the programming block is better than that of the at least one programming block of the engineering program. In one example, the programming block of the plurality of programming blocks is optimized to have an improved memory footprint in comparison with the at least one programming block of the engineering program. In another example, the programming block of the plurality of programming blocks is optimized to have a smaller compiled code in comparison with the at least one programming block of the engineering program. The processing unit 202 is further configured to replace the at least one programming block in the engineering program, with the programming block of the plurlaity of programming blocks, thereby optimizing the generated engineering program. The processing unit 202 is further configured to receive a third request to reduce a number of programming blocks in the plurality of programming blocks is received by the processor 202. The processor 202 is configured to analyze the degree of similarity associated with each programming blocks to determine one or more programming blocks of the plurality of programming blocks which are duplicates of at least one programming block of the plurality of programming blocks.

At step 426, the one or more programming blocks are replaced by the processor 202 with the at least one programming block, thereby reducing the number of programming blocks in the plurality of programming blocks.

At step 428, a fourth request to identify duplicate variables in each programming block of the plurality of programming blocks is received by the processor 202. The processor 202 is configured to analyze the knowledge graph associated with each programming blocks to determine a first set of duplicate variables in the particular programming block.

At step 430, the determined first set of variables are displayed by the processor 202 on the display device of the client devices (120A-N).

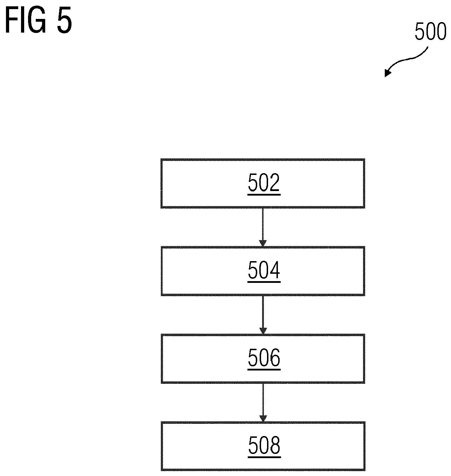

FIG 5 is a process flowchart illustrating an exemplary method 500 of generating engineering programs for the automation system 106, according to an embodiment of the present invention.

At step 502, an incomplete code snippet is received by the processor 202, from a user. The processor 202 is further configured to generate a knowledge graph associated with the incomplete code snippet based on an analysis of the incomplete code snippet.

At step 504, a knowledge graph is generated by the processor 202 for each programming block of a plurality of programming blocks which are stored in the database 118. The processor 202 is configured to determine a degree of similarity associated with the code snippet based on an analysis of the knowledge graph associated with the incomplete code snippet and the knowledge graph associated with each programming block of the plurality of programming blocks.

At 506, one or more programming blocks in the plurality of programming blocks which are similar to the received incomplete code snippet are determined by the processor 202 based on the determined degree of similarity associated with the incomplete code snippet.

At 508, the engineering program is generated by the processor 202 by completion of the incomplete code snippet based on the determined one or more programming blocks which are similar to the received incomplete code snippet. Advantageously, code development time and labor required to generate the engineering program for the automation system are significantly reduced.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

### Reference list

1. an industrial environment 100
2. an engineering system 102
3. one or more client devices 120A-N
4. a network 104
5. one or more engineering objects 108A-N
6. one or more client devices 120A-N
7. a platform 110
8. an automation module 112
9. a server 114
10. a network interface 116
11. a database 118
12. a processor(s) 202
13. an accessible memory 204
14. a storage unit 206
15. a communication interface 208
16. an input-output unit 210
17. a network interface 212
18. a bus 214
19. an integrated development environment (IDE) 216
20. a request handler module 302,
21. an object behavior model generation module 304,
22. an analysis module 306,
23. a modifier module 308
24. an engineering object database 310
25. a validation module 312
26. a deployment module 314.

## Claims

1. A method of generating engineering programs for an automation system (106), the method comprising:
receiving, by a processing unit (202), a first request to generate an engineering program for an automation system (106), wherein the first request comprises information associated with a first programming block;
generating, by the processing unit (202), a knowledge graph for the first programming block, and for each programming block of a plurality of programming blocks which is stored in a database (118);
determining, by the processing unit (202), from the plurality of programming blocks, one or more programming blocks which are similar to the first programming block based on an analysis of the generated knowledge graph associated with the first programming block, and each programming block of the plurality of programming blocks; and
generating the engineering program for the automation system (106) based on a combination of the first programming block and the determined one or more programming blocks of the plurality of programming blocks.

2. The method according to claim 1, further comprising:
analyzing, by the processing unit (202), the knowledge graph generated for each programming block of the plurality of programming blocks to determine a degree of similarity of each programming block of the plurality of programming blocks to the first programming block;
generating, by the processing unit (202), a graph comprising a set of programming blocks which are similar to the first programming block based on the determined degree of similarity associated with each programming block of the plurality of programming blocks; and
displaying, by the processing unit (202), the generated graph comprising the set of programming blocks which are similar to the first programming block, on a display device (120A-N) .

3. The method according to claim 2, wherein the knowledge graph generated for each programming block is generated based on a combination of a control flow graph associated with the particular programming block and data flow relationships associated with a set of variables of the particular programming block.

4. The method according to claim 3, further comprising:
receiving, by the processing unit (202), a second request to classify the plurality of programming blocks into a plurality of clusters;
classifying, by the processing unit (202), the plurality of programming blocks into the plurality of clusters based on the determined degree of similarity associated with each programming block of the plurality of programming blocks; and
displaying, by the processing unit (202), one or more programming blocks which are classified into each cluster of the plurality of clusters.

5. The method according to claim 3, further comprising:
receiving, by the processing unit (202), a second request to reduce a number of programming blocks in the plurality of programming blocks;
analyzing, by the processing unit (202), the degree of similarity associated with each programming blocks to determine one or more programming blocks of the plurality of programming blocks, which are duplicates of at least one programming block of the plurality of programming blocks; and
replacing, by the processing unit (202), the one or more programming blocks with the at least one programming block, thereby reducing the number of programming blocks in the plurality of programming blocks.

6. The method according to claim 3, further comprising:
receiving, by the processing unit (202), a second request to optimize the generated engineering program;
analyzing, by the processing unit (202), the degree of similarity associated with each programming block in the engineering program, to determine a programming block of the plurality of programming blocks, which is more optimized than at least one programming block of the engineering program; and
replacing, by the processing unit (202), the at least one programming block in the engineering program, with the programming block of the plurality of programming blocks, thereby optimizing the generated engineering program.

7. The method according to claim 3, wherein generating the knowledge graph associated with each programming block comprises:
executing, by the processing unit (202), an initial pass to collect a control flow and a data flow of the particular programming block, wherein the collected control flow comprises an order of statements in the particular programming block, the data flow comprises behavioral information associated with one or more data variables of the particular programming block, and the knowledge graph is generated based on the collected control flow and the collected data flow associated with the particular programming block.

8. The method according to claim 1, wherein analyzing, by the processing unit, the knowledge graph generated for each programming block of the plurality of programming blocks comprises:
generating, by the processing unit (202), two or more embeddings for the generated knowledge graph, wherein each of the one or more embeddings comprises a plurality of tokens, and wherein each of the plurality of tokens correspond to a code statement in the particular programming block;
determining, by the processing unit (202), a distance between each pair of embeddings in the two or more embeddings generated for the knowledge graph; and
determining, by the processing unit (202), the degree of similarity for the particular programming block based on the determined distance between each pair of embeddings in the two or more embeddings generated for the knowledge graph.

9. A method of generating engineering programs for an automation system (106), the method comprising:
receiving, by the processing unit (202), an incomplete code snippet from a user;
generating, by the processing unit (202), a knowledge graph associated with the incomplete code snippet, based on an analysis of the incomplete code snippet;
generating, by the processing unit (202), a knowledge graph for each programming block of a plurality of programming blocks which are stored in a database (118) ;
determining, by the processing unit (202), a degree of similarity associated with the code snippet based on an analysis of the knowledge graph associated with the incomplete code snippet and the knowledge graph associated with each programming block of the plurality of programming blocks;
determining, by the processing unit (202), one or more programming blocks, in the plurality of programming blocks, which are similar to the received incomplete code snippet, based on the determined degree of similarity associated with the incomplete code snippet; and
generating, by the processing unit (202), the engineering program by completion of the incomplete code snippet based on the determined one or more programming blocks which are similar to the received incomplete code snippet.

10. The method according to claim 9, wherein the knowledge graph generated for the each programming block is generated based on a combination of a control flow graph associated with the particular programming block and data flow relationships associated with a set of variables of the particular programming block.

11. The method according to claim 10, further comprising:
receiving, by the processing unit (202), a second request to classify the plurality of programming blocks into a plurality of clusters;
classifying, by the processing unit (202), the plurality of programming blocks into the plurality of clusters based on the determined degree of similarity associated with each programming block of the plurality of programming blocks; and
displaying, by the processing unit (202), one or more programming blocks which are classified into each cluster of the plurality of clusters.

12. The method according to claim 11, further comprising:
receiving, by the processing unit (202), a second request to reduce a number of programming blocks in the plurality of programming blocks;
analyzing, by the processing unit (202), the degree of similarity associated with each programming blocks to determine one or more programming blocks of the plurality of programming blocks, which are duplicates of at least one programming block of the plurality of programming blocks; and
replacing, by the processing unit (202), the one or more programming blocks with the at least one programming block, thereby reducing the number of programming blocks in the plurality of programming blocks.

13. An engineering system for generation of engineering programs for an automation system (106), wherein the engineering system comprises:
one or more processors (202); and
a memory (204) coupled to the one or more processor(s), wherein the memory comprises an automation module stored in the form of machine-readable instructions executable by the one or more processor(s), wherein the automation module (112) is capable of performing a method according to any of the claims 1-12.

14. An industrial environment (100) comprising:
an engineering system (102) as claimed in claim 10;
an automation system (106) comprising one or more physical components; and
one or more client devices (120A-N) communicatively coupled to the engineering system (102) via a network (104), wherein the engineering system (102) is configured to perform a method according to any of the claims 1 to 12.

15. A computer-program product, having machine-readable instructions stored therein, that when executed by a processor(s) (202), cause the processors to perform a method according to any of the claims 1-12.
